# NEUE EUROPÄISCHE PATENTSCHRIFT

(11) **EP 2 153 061 B2**
(45) Veröffentlichungstag und Bekanntmachung des Hinweises auf die Entscheidung über den Einspruch: **27.11.2019**
(45) Hinweis auf die Patenterteilung: 18.07.2012
(21) Anmeldenummer: 08749196.5
(22) Anmeldetag: 28.04.2008
(51) Int. Cl.: F03D 7/02, F03D 17/00, F03D 80/50

(54) **VERFAHREN ZUM BETREIBEN EINER WINDENERGIEANLAGE**
METHOD FOR THE OPERATION OF A WIND POWER PLANT
PROCÉDÉ PERMETTANT DE FAIRE FONCTIONNER UNE ÉOLIENNE

(30) Priorität: 13.06.2007 DE 102007027849
(43) Veröffentlichungstag der Anmeldung: 17.02.2010
(73) Patentinhaber: Senvion GmbH, 22297 Hamburg (DE)
(72) Erfinder: VON MUTIUS, Martin, 24358 Ascheffel (DE); ALTEMARK, Jens, 24768 Rendsburg (DE); TREDE, Alf, 25885 Immenstedt (DE)
(74) Vertreter: Wallinger Ricker Schlotter Tostmann
(86) Internationale Anmeldenummer: PCT/EP2008/003427
(87) Internationale Veröffentlichungsnummer: WO 2008/151695

(56) Entgegenhaltungen:
- EP-A- 1 519 040
- EP-A- 1 531 376
- EP-A- 1 659 287
- WO-A-03/029648
- WO-A-2005/111414
- WO-A-2007/010322
- JP-A- H09 128 667

## Beschreibung

Die Erfindung betrifft ein Verfahren zum Betreiben einer Windenergieanlage sowie eine Windenergieanlage. Darüber hinaus betrifft die Erfindung eine Verwendung einer Warneinrichtung zur Erzeugung einer Wartungswarnmitteilung.

Windenergieanlagen der Patentanmelderin sind unter der Bezeichnung 5M, MM92, MM82, MM70 sowie MD77 bekannt.

Bei der Durchführung von Wartungs- und/oder Montagearbeiten an bestimmten Windenergieanlagen ist es generelle Praxis, dass diese Arbeiten nur bei Windgeschwindigkeiten unterhalb von Grenzwerten, z.B. von 8 m/s, 15 m/s oder 25 m/s, durchgeführt werden dürfen.

Darüber hinaus werden bei länger andauernden Wartungsmaßnahmen die Dienstleistungen von Wetterdiensten in Anspruch genommen, um Voraussagen für die Wetterlage für den Ort treffen zu können, an dem die Wartungsarbeiten durchgeführt werden. Werden beispielsweise Sturmböen oder starke Winde in dem entsprechenden Gebiet vorhergesagt, werden die Wartungsarbeiten nicht durchgeführt oder abgebrochen.

In EP-A-1 531 376 sind eine Überwachungs- und Datenverarbeitungseinheit für Windräder und ein System für eine vorbeugende Wartung für Windräderanlagen beschrieben. Hierbei verfügt das Überwachungs- und Verarbeitungsgerät über Verbindungsmittel mit einem Kontrollsystem der Windenergieanlage und mit Verbindungsmitteln mit einer Gruppe von Beschleunigungssensoren, die an Komponenten der Windenergieanlage platziert sind. Darüber hinaus sind auch Mittel zur Verarbeitung der abgetasteten Signale der Beschleunigungssensoren vorgesehen, um einen Satz von Gesamtkennwerten zu bestimmen. Außerdem sind Mittel vorgesehen, um Alarme zu erzeugen, welche mit Fehlfunktionen oder Ausfällen von mechanischen Komponenten der Windenergieanlage zusammenhängen.

Weiterhin offenbart EP-A-1 519 040 ein Verfahren und eine Vorrichtung zur Fernbedienung eines Windparks, wobei von einem Leistungsmanagementregelsystem die Leistung für eine Gruppe von Windgeneratoren geregelt wird. Hierzu ist eine Netzwerkschnittstelle vorgesehen, um einem Benutzer eines Überwachungs- und Kontrollnetzes den Zugriff auf Einstellungen zur Leistungsabgabe zu ermöglichen.

In WO-A-03/029648 sind außerdem ein Verfahren und ein Rechnersystem zur Verarbeitung von Betriebsdaten von Windenergieanlagen beschrieben, wobei die Betriebsdaten von einer Vielzahl von Windenergieanlagen erfasst und abgespeichert werden. Anschließend wird eine Vielzahl von vorbestimmten Korrekturroutinen durchgeführt.

Des Weiteren offenbart WO-A-2005/111414 ein Verfahren zur Steuerung der Rotorblätter einer Windenergieanlage sowie eine Windenergieanlage mit Messsystemen zur Durchführung des Verfahrens. Hierbei wird der Spannungs- oder Dehnungszustand eines Rotorblatts einer Windkraftanlage detektiert und in Abhängigkeit von den dadurch erhaltenen Detektionssignalen entweder ein Alarmsignal ausgelöst oder eine Steuerung der Stellung des Rotorblatts ausgeführt.

Überdies ist in WO-A-2007/010322 ein Regelsystem für eine Windenergieanlage beschrieben, wobei Turmpositionssensoren sowie andere Turmbeschleunigungs- und Geschwindigkeitssensoren vorgesehen sind. Unter Verwendung der gemessenen Bewegung sowie der Generatorrotationsrate und des Pitchwinkels wird der Windfluss über die angeströmte Fläche des Rotors und die Turmbewegung vorhergesagt. Hierdurch werden u.a. auch der Betriebspunkt der Windenergieanlage eingestellt sowie die Turmschwingungen gedämpft.

Ferner offenbart EP-A-1 659 287 eine Vorrichtung und ein Verfahren zur Funktionsprüfung einer Windenergieanlage, wobei eine Simulationseinheit unter Verwendung von mathematischen Modellen für bestimmte Ausgangssituationen die sich für die anliegenden Steuersignale ergebenden Istwerte von Bauteilen der Windenergieanlage modelliert.

Ausgehend von diesem Stand der Technik ist es Aufgabe der vorliegenden Erfindung, die Durchführung von Wartungsarbeiten an einer Windenergieanlage für das Wartungspersonal an der Windenergieanlage zu ermöglichen, wobei die Sicherheit von Wartungspersonen und die Sicherheit der WEA sowie deren Arretiersysteme erhöht werden soll.

Die Aufgabe wird gelöst durch ein Verfahren nach Anspruch 1. Das Verfahren zum Betreiben einer Windenergieanlage wird erfindungsgemäß dadurch weitergebildet, dass
- wenigstens ein durch Windbewegung außerhalb der Windenergieanlage induzierter physikalischer Zustand der Umgebung außerhalb der Windenergieanlage als äußerer physikalischer Zustand erfasst wird und/oder wenigstens ein physikalischer Zustand eines Bauteils der Windenergieanlage, der durch die Windbewegung außerhalb der Windenergieanlage beeinflusst wird, als innerer physikalischer Zustand erfasst wird,
- der wenigstens eine äußere physikalische Zustand und/oder der wenigstens eine innere physikalische Zustand ausgewertet werden,
- der wenigstens eine äußere physikalische Zustand mit einem vorbestimmten Referenzwert für den äußeren physikalischen Zustand verglichen wird und/oder der wenigstens eine innere physikalische Zustand mit einem vorbestimmten Referenzwert für den inneren physikalischen Zustand verglichen wird,
- in Abhängigkeit des Vergleichs und
   a.) bei Überschreitung eines vorbestimmten Grenzwertes für den wenigstens einen äußeren physikalischen Zustand und/oder
   b.) bei Überschreitung eines vorbestimmten Grenzwertes für den wenigstens einen inneren physikalischen Zustand
wenigstens eine Wartungswarnmitteilung erzeugt wird, wobei das Verfahren vor oder während Wartungsarbeiten an der Windenergieanlage, vorzugsweise bei einem Stillstand oder während eines Stillstands der Windenergieanlage, ausgeführt wird.

Bislang werden vor Beginn längerer Wartungsarbeiten an einer Windenergieanlage, bei denen eine Rotorarretierung oder eine andere Arretierung eingelegt werden muss, eine Wettervorhersage über einen prognostizierten Wartungszeitraum eingeholt, um sicherzustellen, dass die zulässigen Windbedingungen während der Wartungsarbeiten nicht überschritten werden. Bei höheren Windgeschwindigkeiten müssen allerdings die Arbeiten abgebrochen werden. Während der Wartungsarbeiten besteht eine Aufgabe eines Mitarbeiters eines Wartungsdienstes hierbei derzeit darin, die Anzeigen von Steuerdisplays zu beobachten, um aufgrund seiner Erfahrungswerte zu entscheiden, wann die zulässigen Umgebungsbedingungen zur Durchführung der Wartungsarbeiten überschritten werden. Diese Erfahrungswerte beruhen auf einer persönlichen Einschätzung und somit einer subjektiven Interpretation durch den Mitarbeiter.

Demgegenüber ist gemäß der Erfindung nunmehr vorgesehen, dass die Umgebungsbedingungen an einer Windenergieanlage vor oder während der Durchführung der Wartungsarbeiten durch Sensoren an vorbestimmten relevanten Messstationen bzw. -orten erfasst werden.

Hierbei werden beispielsweise als äußere physikalische Zustände die Windgeschwindigkeit und/oder die Windrichtung und/oder die Wellenbewegung eines Gewässers und/oder die Wellenfrequenz eines Gewässers und/oder die Wellenhöhe eines Gewässers, das sich in der Nähe der zu wartenden Windenergieanlage befindet oder das die Windenergieanlage umgibt, erfasst. Diese durch Windbewegung erzeugten physikalischen Zustände außerhalb der Windenergieanlage sind Umgebungsparameter, die in direktem Zusammenhang mit der Windbewegung stehen.

Darüber hinaus ist es im Rahmen der Erfindung denkbar, dass der physikalische Zustand eines Bauteils der Windenergieanlage, der durch die Windbewegung entsprechend beeinflusst wird, als Parameter erfasst wird, der im indirekten Zusammenhang mit der Windbewegung steht. Beispielsweise werden die Auslenkung des Turms einer Windenergieanlage oder eines Rotorblatts sowie Vibration oder, insbesondere mechanische, Beanspruchung usw. als innere physikalische Zustände der Windenergieanlage bzw. des Bauteils erfasst.

Insgesamt wird durch die Erfindung die Sicherheit von Wartungspersonen erhöht, da die Wartungspersonen aufgrund von physikalisch erfassbaren bzw. messbaren Zuständen der Umgebung bzw. von Bauteilen gewarnt werden, um die Wartungsarbeiten rechtzeitig abzubrechen.

Insbesondere handelt es sich bei den Wartungswarnmitteilungen um Warnungsmitteilungen, die entsprechend an das Wartungspersonal gezielt gerichtet bzw. übermittelt werden. Typische Wartungsmaßnahmen sind neben der Ersterrichtung und Inbetriebnahme allgemeine Serviceaktivitäten an Bauteilen sowie das Öffnen von Luken in Betriebsräumen, im Turm, in der Gondel sowie im Spinner (Verkleidung der Rotornabe), der Austausch von Rotorblättern oder anderen Großkomponenten der Windenergieanlage, die Wartung von Azimutantrieben, Blattverstellsystemen, Bremsvorrichtungen sowie die Wartung von Anlagenteilen außerhalb des Maschinengehäuses wie die (Wind-)Messsensorik, Blitzschutzsystem, Reinigung von Rotorblättern oder Türmen etc.

Insbesondere bei Offshore-Windenergieanlagen gehört auch der Zugang zu den Windenergieanlagen zu den sicherheitskritischen Serviceaktivitäten, da oberhalb einer gewissen Wellenhöhe (ggf. gepaart mit der Wellenrichtung) ein Übersetzen aus einem Schiff nicht mehr möglich ist, ebenso wie bei sehr schlechten Wetterbedingungen auch kein Hubschrauber mehr Personal absetzen bzw. abholen kann.

Durch die Erfindung wird ein Überwachungsverfahren bereitgestellt, das dem Schutz von Wartungspersonen bei der Durchführung von Wartungsarbeiten bzw. Aktivitäten dient.

Im Rahmen der Erfindung wird unter dem Begriff "Referenzwert" ein Sollwert für den entsprechenden äußeren oder inneren physikalischen Zustand verstanden. Darüber hinaus kann in einer weiteren Ausgestaltung der Referenzwert auch den Wert des Grenzwertes einnehmen, um kritische oder überkritische Zustände an der Windenergieanlage für das Wartungspersonal zu vermeiden.

Dazu ist weiter vorgesehen, dass als innerer physikalischer Zustand die Auslenkung des Turms der Windenergieanlage und/oder die Auslenkung des Rotorblatts der Windenergieanlage und/oder die Vibration eines Bauteils und/oder die, insbesondere mechanische, Belastung eines Bauteils der Windenergieanlage erfasst werden.

Gemäß einer bevorzugten Ausführungsform ist weiterhin vorgesehen, dass der äußere physikalische Zustand für eine vorbestimmte Zeitdauer und/oder der innere physikalische Zustand für eine vorbestimmte Zeitdauer jeweils erfasst und/oder aufgezeichnet werden.

Die Erfassung der physikalischen Zustände erfolgt vorzugsweise mittels eines Sensors, während die Aufzeichnung der gemessenen physikalischen Zustände in einer Auswerteeinrichtung erfolgt, mittels der auch die Auswertung der Messergebnisse ausgeführt wird.

Um qualifizierte Aussagen über die Veränderung der durch die Windbewegung erzeugten physikalischen Zustände zu ermöglichen, ist weiterhin vorgesehen, dass die erfassten äußeren physikalischen Zustände zu einem äußeren Zustandsmittelwert gemittelt werden und/oder die erfassten inneren physikalischen Zustände zu einem inneren Zustandsmittelwert gemittelt werden. Hierdurch findet die Parameterauswertung aufgrund von statistischen Verfahren, z.B. einer zeitlichen Mittelwertbildung, statt. Außerdem wird dadurch erreicht, dass eine Warnmitteilung erzeugt wird, wenn dauerhaft für eine vorbestimmte Zeitdauer, z.B. 10 min, 30 s, der Mittelwert über dem Grenzwert bzw. gemittelten Grenzwert liegt.

Darüber hinaus sieht eine weitere Ausführungsform des Verfahrens vor, dass als Wartungswarnmitteilung ein akustisches und/oder optisches und/oder mechanisches Wartungswarnsignal erzeugt werden, wobei insbesondere das Wartungswarnsignal einer Wartungsperson übermittelt wird. Hierdurch wird ein Wartungswarnsignal an eine Wartungsperson auf akustische oder visuelle oder auf mechanisch wahrnehmbare Weise (Vibration) mitgeteilt. Insbesondere wird das Wartungswarnsignal an ein vorzugsweise mobiles Endgerät übertragen.

Insbesondere werden Wartungswarnmitteilungen mit unterschiedlichen Warnstufen und/oder Warndauer und/oder Warnintensitäten in Abhängigkeit von der vorbestimmten Größe der Abweichungen vom vorbestimmten Grenzwert erzeugt. Hierdurch wird dem Wartungspersonal mitgeteilt, dass bei einer ersten Warnstufe ein kritischer Zustand mit einer gefährlichen Situation erreicht ist. Wird die zweite Warnstufe ausgelöst, so wird dem Wartungspersonal an der Windenergieanlage verdeutlicht, dass nunmehr eine deutlich gefährlichere bzw. überkritische Situation an der Windenergieanlage eingetreten ist. In einer dritten Stufe kann dem Wartungspersonal dann mitgeteilt werden, dass Lebensgefahr für sämtliche Personen sowie oder ein Versagensrisiko der Arretiervorrichtung an der Windenergieanlage besteht.

Bevorzugterweise werden die Wartungswarnmitteilung oder Wartungswarnmitteilungen an ein mobiles, insbesondere tragbares, Warngerät übertragen, das die Wartungspersonen mit sich führen. Hierzu ist es denkbar, dass dem Wartungspersonal Warnmitteilungen übermittelt werden, die von dem Wartungspersonal neben der visuellen und akustischen Warnung auch andere fühlbare Warnsignale übermittelt. Beispielsweise können die fühlbaren Warnsignale thermischer, elektrischer Art sein. Darüber hinaus kann die Warnmitteilung dadurch übermittelt werden, dass die Luftfeuchtigkeit in einem Raum erhöht oder erniedrigt wird oder Duftstoffe oder dergleichen in den Raum eingebracht werden, um den Wartungspersonen mitzuteilen, dass eine potentiell gefährliche Situation bei der Wartung besteht.

Vorteilhafterweise wird der äußere physikalische Zustand mittels eines Sensors an der Windenergieanlage und/oder mittels eines räumlich von der Windenergieanlage getrennten Sensors erfasst. Im Rahmen der Erfindung ist es beispielsweise denkbar, dass die äußeren physikalischen Zustände bzw. die Umgebungsparameter mit Hilfe von Fernanalysen in Form von Wetterradar oder Wettersatelliten bestimmt oder ermittelt werden. In diesem Fall werden die einsatzbezogene Auswertung und der Vergleich mit den Grenzwerten beispielsweise in einer Fernüberwachungszentrale durchgeführt, um anschließend bei Überschreitung der Grenzwerte dem Wartungspersonal vor Ort die Warnmitteilung zu übermitteln. Darüber hinaus ist es in einer Ausgestaltung vorgesehen, dass der Messsensor räumlich getrennt von der Windenergieanlage aufgestellt ist. Hierbei befindet sich der Messsensor beispielsweise auf einem Windmessmast oder ist Teil eines Wetterradars oder Wellenradars.

Ebenfalls vorgesehen ist, dass in einem größeren (Offshore-) Windpark auf die Messdaten benachbarter Windenergieanlagen zugegriffen wird, insbesondere auf Windenergieanlagen, die in Windrichtung vor der zu wartenden Windenergieanlage gelegen sind und somit eventuelle Windböen erkannt werden, bevor sie auf die zu wartende Windenergieanlage treffen.

Darüber hinaus wird insbesondere der innere physikalische Zustand mittels eines Sensors an dem Bauteil der Windenergieanlage erfasst. Entsprechende Sensoren sind dem Fachmann bekannt, um beispielsweise Vibrationen oder mechanische Spannungen des Bauteils zu ermitteln.

Außerdem zeichnet sich das Verfahren dadurch aus, dass bei der Auswertung des wenigstens einen äußeren physikalischen Zustands und/oder des wenigstens einen inneren physikalischen Zustands die Zeitdauer für eine durchzuführende Wartungsmaßnahme an der Windenergieanlage berücksichtigt wird. Hierdurch wird bei der Auswertung der Messsignale in einer Auswerteeinheit eine Prognose über die geplante Dauer der Wartungsaktivitäten bereitgestellt. Durch diese Prognosefunktion können auch zuverlässige Abschätzungen getroffen werden, ob die Wartungsmaßnahme bei einer (ersten) Warnstufe fortgesetzt oder abgebrochen werden soll.

Überdies ist in einer Ausgestaltung vorgesehen, dass der vorbestimmte Grenzwert und/oder der vorbestimmte Referenzwert für den äußeren physikalischen Zustand von einer Fernüberwachungseinrichtung vorgegeben werden und/oder der vorbestimmte Grenzwert und/oder der vorbestimmte Referenzwert für den inneren physikalischen Zustand von einer Fernüberwachungseinrichtung vorgegeben werden kann. In einer Alternative kann auch das Wartungspersonal die Grenzwerte an der Anlage selbst bestimmen.

Weiterhin zeichnet sich das Verfahren dadurch aus, dass gleichzeitig für den äußeren physikalischen Zustand jeweils die Abweichung eines ersten Mittelwerts des Zustands für eine erste vorbestimmte Zeitdauer von einem ersten vorbestimmten Referenzwert und die Abweichung eines zweiten Mittelwerts des Zustands für eine zweite vorbestimmte Zeitdauer von einem zweiten vorbestimmten Referenzwert überwacht werden und/oder dass gleichzeitig für den inneren physikalischen Zustand jeweils die Abweichung eines ersten Mittelwerts des Zustands für eine erste vorbestimmte Zeitdauer von einem ersten vorbestimmten Referenzwert und die Abweichung eines zweiten Mittelwerts des Zustands für eine zweite vorbestimmte Zeitdauer von einem zweiten vorbestimmten Referenzwert überwacht werden. Dadurch ist für unterschiedliche Zeiträume die zeitliche Entwicklung von Mittelwerten für den inneren sowie äußeren physikalischen Zustand festzustellen.

Beispielsweise werden die Mittelwerte für unterschiedliche Zeiträume, z.B. 10 min, 30 s, 3 s überwacht. Hierdurch lassen sich in bekannter Weise physikalische Signale mit im Wesentlichen stochastischer Natur, insbesondere meteorologische Größen wie die Windgeschwindigkeit etc., mit einfachen mathematischen Mitteln effektiv überwachen.

Weiterhin ist in einer bevorzugten Ausführungsform vorgesehen, dass bei Überschreitung eines Grenzwerts eines Mittelwerts des äußeren physikalischen Zustandes eine erste Wartungswarnmitteilung und bei Überschreitung beider Grenzwerte des äußeren physikalischen Zustands eine zweite Wartungswarnmitteilung, erzeugt werden.

Eine weitere Ausgestaltung des Verfahrens zeichnet sich dadurch aus, dass bei Überschreitung eines Grenzwerts eines Mittelwerts des inneren physikalischen Zustandes eine erste Wartungswarnmitteilung und bei Überschreitung beider Grenzwerte des inneren physikalischen Zustands eine zweite Wartungswarnmitteilung erzeugt werden.

Beispielsweise können die Wartungswarnmitteillungen nach Art einer Ampel bzw. Ampelanzeige abgestuft sein, wobei bei der Signalfarbe "GRÜN" die Wartung für das Personal unbedenklich ist auf Grund günstiger äußerer Zustände (z.B. kein oder nur leichter Wind). Bei der Signalfarbe bzw. beim Signalgrenzwert "ORANGE" besteht eine potenzielle Gefährdung und bei "ROT" unmittelbare Gefahr für das Wartungspersonal.

Nachfolgende Tabelle zeigt am Beispiel der Windgeschwindigkeit, wie durch unterschiedliche Grenzwerte für unterschiedliche zeitliche Mittelwerte eine unterschiedliche Stufung der Warnmitteilungen in Form eines Ampelsignals erzeugt wird.

Die drei Grenzwerte einer Signalstufe sind hierbei mit einem logischen ODER verknüpft, d.h. die Signalstufe "GELB" wird beispielsweise ausgelöst, wenn die Windgeschwindigkeit 15 m/s im 10 min-Mittel oder 20 m/s im 30 s-Mittel oder 22 m/s im 3 s-Mittel beträgt.

| Signalgrenzwerte | 10 min-Grenzwert [m/s] | 30 s-Grenzwert [m/s] | 3s-Grenzwert [m/s] |
|---|---|---|---|
| ROT | 20 | 26 | 29 |
| GELB | 15 | 20 | 22 |
| GRÜN | 12 | 16 | 18 |

Die Festlegung der Grenzwerte erfolgt mit an sich bekannten Berechnungsverfahren, z.B. mittels Böenfaktoren oder durch Simulationen.

Außerdem werden in einer weiteren Ausgestaltung des Verfahrens bei der Auswertung meteorologische Daten über die Umgebung der Windenergieanlage entsprechend berücksichtigt. Hierdurch wird die Vorhersagbarkeit von Wetterszenarien an dem Ort der Wartungsmitteilung weiterhin verbessert.

Zur Erhöhung der Sicherheit des Wartungspersonals bei der Durchführung von Wartungsarbeiten ist weiterhin vorgesehen, dass als Wartungswarnmitteilung eine akustische Sprachmitteilung oder Textmitteilung von einer Warneinrichtung erzeugt wird, die über einen Lautsprecher an oder in der Windenergieanlage übertragen wird. Hierbei sind beispielsweise in einer Steuereinrichtung der Windenergieanlage oder einem separaten Sprachmodul entsprechende Warnmitteilungen hinterlegt. Wird eine Gefährdung des die Wartungsarbeiten ausführenden Wartungspersonals festgestellt, wird eine entsprechende Sprachmitteilung über wenigstens einen Lautsprecher dem Wartungspersonal akustisch mitgeteilt.

Hierbei wird die Sprachmitteilung in einer entsprechenden Landessprache oder in einer internationalen Sprache, wie z.B. Englisch, mitgeteilt. Eine derartige Textwarnung kann beispielsweise sein: "Wind zu stark für Nabe betreten", "Nabe verlassen", "Bitte erst Rotorarretierung aktivieren bzw. einlegen", Bitte erst Rotorarretierung deaktivieren bzw. lösen", "Bitte erst Windnachführung aktivieren oder einschalten", Bitte erst Windnachführung deaktivieren bzw. ausschalten", "Bitte erst Blattverstellung aktivieren bzw. einschalten", "Bitte erst Blattverstellung deaktivieren bzw. ausschalten", "Bitte erst Schaltschrank oder Baugruppe stromlos schalten", "Luke/Klappe/Gondelverkleidung umgehend schließen", "Achtung! Windenergieanlage bitte umgehend verlassen", oder "Rotornabe/Maschinenhaus/Turm/Trafostation bitte umgehend verlassen" oder "Achtung! Rotorblätter nicht in Fahnenposition".

Darüber hinaus ist es im Rahmen der Erfindung möglich, über die installierten Lautsprecher auch entsprechende Statusmitteilungen dem Wartungspersonal zu übermitteln. In einer weiteren Ausgestaltung können auch entsprechende Wartungsanweisungen bzw. Arbeitsanweisungen auf akustische Weise dem Wartungspersonal mitgeteilt werden. Dabei kann in einer weiteren Ausgestaltung die Wartungsanweisung durch eine oder von einer Fernüberwachungseinrichtung mittels eines sogenannten SCADA-Systems, wie es beispielsweise unter der Bezeichnung "REguard" der Patentinhaberin bekannt ist, erfolgen. Mittels eines SCADA-Systems als allgemeines Überwachungs- und Datenerfassungssystem für Windparks werden entsprechende Daten über Windenergieanlagen eines Windparks dokumentiert bzw. die Windenergieanlagen entsprechend überwacht und das Betriebsverhalten der Windenergieanlagen in den Windparks geregelt.

Außerdem ist es im Rahmen der Erfindung weiterhin denkbar, dass aus einer entfernten Fernüberwachungszentrale bzw. Leitwarte eine direkte Durchsage über die Lautsprecher an das Wartungspersonal vor Ort erfolgt. Diese genannten Maßnahmen eignen sich allesamt dafür, die Sicherheit von Personen bei der Durchführung von Wartungsarbeiten an einer Windenergieanlage signifikant zu erhöhen.

Überdies werden weiterhin Sicherheitsmaßnahmen für das Wartungspersonal dadurch verbessert, dass die Warneinrichtung durch eine Betätigungsaktion oder durch Eingabe von durchzuführenden, vorzugsweise spezifizierten, Wartungsarbeiten bei oder während oder vor Durchführung von Wartungsarbeiten an der Windenergieanlage, aktiviert wird oder ist. Hierdurch wird eine Warneinrichtung automatisch aktiviert, sobald Wartungsarbeiten an der Windenergieanlage aufgenommen werden. Dies kann durch das Einlegen der Rotorarretierung oder die Betätigung eines Serviceschalters oder das Öffnen einer Klappe, z.B. zum Durchstieg in die Rotornabe erfolgen. Zudem kann die Aktivierung der Warneinrichtung auf der Basis einer interaktiven Aktion mit dem Wartungspersonal vor Ort erfolgen. Hierbei kann die Warneinrichtung derart mit der Steuerungseinrichtung der Windenergieanlage verknüpft oder verbunden sein, dass nur die durch Eingabe an einer entsprechenden Eingabeeinheit spezifizierten Wartungsarbeiten durchführbar sind bzw. ausschließlich die vom Wartungspersonal spezifizierten Wartungsmaßnahmen ausgeführt werden können, wenn diese durch eine aktive Eingabe unter Angabe der Art und Dauer der Wartungsarbeiten der Steuereinrichtung gemeldet bzw. übermittelt werden.

Bevorzugt kann dabei vorgesehen sein, dass nach Einlegen der Rotorarretierung die Klappe zum Durchstieg in die Rotornabe nur geöffnet werden kann, wenn das Wartungspersonal zuvor die Warneinrichtung über die Eingabeeinheit Informationen über die voraussichtliche Dauer und Art des Wartungseinsatzes mitgeteilt hat.

Die Eingabe bzw. die eingegebenen Informationen über die Art sowie die Dauer der durchzuführenden Arbeiten ist deshalb von Wichtigkeit, weil z.B. unterschiedliche Grenzwerte für die Erzeugung einer Warnmitteilung vorliegen können, je nachdem, ob z.B. die Rotorblätter oder der Windnachführwinkel des Maschinenhauses auf dem Turm während der Wartung verstellt werden müssen und/oder können.

Weiterhin ist vorzugsweise die Warneinrichtung mit der Steuerungseinrichtung der Windenenergieanlage gemäß einer Ausgestaltung derart verknüpft, dass auch nur die zuvor spezifizierten Wartungsarbeiten durchführbar sind, d.h., dass beispielsweise ein Verfahren der Rotorblätter oder der Windnachführung bzw. deren Deaktivierung nur dann möglich ist, wenn die durchzuführenden bzw. die geplanten Wartungsmaßnahmen auch zuvor angemeldet worden ist.

Des Weiteren zeichnet sich das erfindungsgemäße Verfahren dadurch aus, dass anhand der Eingabe oder der Kategorie bzw. in Abhängigkeit von spezifizierten Wartungsarbeiten, vorzugsweise über die Art oder die Dauer der Wartungsarbeiten, der Grenzwert für den wenigstens einen äußeren physikalischen Zustand und/oder der Grenzwert für den wenigstens einen inneren physikalischen Zustand für die Erzeugung der Wartungswarnmitteilungen mit unterschiedlichen Warnstufen variiert und/oder bestimmt werden. Damit wird eine entsprechende Sicherheitsstufe für das Wartungspersonal bereitgestellt, so dass das Wartungspersonal bei einer potentiellen Gefährdung bei einfachen Arbeiten noch nicht gewarnt wird, während dies bei umfangreicheren Arbeiten erfolgt.

Weiterhin ist es vorteilhaft, wenn bei der Übermittlung der Sprachmitteilungen die Lautstärke des oder der Lautsprecher der Windenergieanlagen an die Lautstärke der Umgebung des oder der Lautsprecher angepasst wird, so dass gewährleistet ist, dass die Sprachmitteilungen bzw. die Sprachausgabe der Warnmeldungen oder Wartungsanweisungen automatisch an das Umgebungsgeräusch angepasst wird oder ist.

Überdies ist es bevorzugt, wenn die Auswertung der Messdaten der äußeren wie inneren physikalischen Zustände in einer Fernüberwachungszentrale unter Berücksichtigung von regionalen Wetter- bzw. Windprognosen erstellt wird, wodurch genaue Voraussagen für die Wetterlage am Errichtungsort der Windenergieanlage, die gewartet werden soll, getroffen werden. Hierbei können die entsprechenden Informationen bzw. Daten von externen Wetterprognoseeinrichtungen weiterhin berücksichtigt werden. Werden beispielsweise Sturmböen oder starke Winde in einem entsprechenden Gebiet vorhergesagt, werden die Wartungsarbeiten abgebrochen oder überhaupt nicht durchgeführt. Unter Berücksichtigung der regionalen Wetterprognosen und unter Berücksichtigung der lokalen Messdaten zu den äußeren physikalischen Zuständen oder den gemessenen inneren physikalischen Zuständen an der zu wartenden Windenergieanlage werden die entsprechenden Warnmitteilungen erzeugt und ggf. bei einer Sicherheitsgefährdung an das Wartungspersonal entsprechend übermittelt.

Dabei ist es im Rahmen der Erfindung denkbar, dass die Auswertung der Messdaten der äußeren und/oder inneren physikalischen Zustände in der Fernüberwachungszentrale unter Zuhilfenahme externer Wetterprognosedienstleistern, wie z.B. dem Deutscher Wetterdienst (DWD) oder anderen Wetterdiensten, erfolgen kann, wobei die bekannten Möglichkeiten der Wind- und Wetterprognose berücksichtigt werden, um dadurch genaue Voraussagen für die Wetterlage für den Ort der zu wartenden Windenergieanlage treffen zu können, an dem die Wartungsarbeiten durchgeführt werden. Werden beispielsweise Sturmböen oder starke Winde in dem entsprechenden Gebiet vorhergesagt, werden die Wartungsarbeiten nicht durchgeführt oder abgebrochen. Hierbei ist insbesondere weiterhin denkbar, die Funktion der Fernüberwachungszentrale direkt bei einem externen (Wetterprognose-)Dienstleister einzurichten oder Mischformen einzurichten, bei der vorausgewertete Daten und Kennzahlen von dem externen Dienstleister an die Fernüberwachungszentrale übermittelt werden, von der nach Auswertung zusätzlicher Messdaten aus unmittelbarer Nähe der Windenergieanlage unter Berücksichtigung der Daten des externen Dienstleisters entsprechende Warnmitteilungen erzeugt und/oder übermittelt werden.

Insgesamt wird eine Windenergieanlage (WEA) bereitgestellt, wobei die Windenergieanlage (WEA) vor oder während der Durchführung von Wartungsarbeiten an der Windenergieanlage (WEA), und weiter vorzugsweise bei einem Stillstand der Windenergieanlage eine Signalvorrichtung aufweist, und die Signalvorrichtung eine Warnmitteilung, insbesondere Wartungswarnmitteilung, von einer Auswerteeinrichtung empfängt und meldet. Im Rahmen der Erfindung wird die Windenenergieanlage gemäß dem voranstehend beschriebenen Verfahren in der einen oder anderen Variante betrieben.

Darüber hinaus wird im Rahmen der Erfindung unter einer Auswerteeinrichtung auch eine Sensorsignalauswerteeinrichtung verstanden, mittels der Sensorsignale von Sensoren, die an oder in einer Windenergieanlage vorgesehen sind, um beispielsweise äußere und/oder innere physikalische Zustände zu erfassen, ausgewertet werden, so dass anhand der ermittelten Auswertegrößen sowie in Abhängigkeit der Auswertegrößen festgestellt wird, ob eine entsprechende Warnmitteilung oder akustische Sprachmitteilung erzeugt werden muss.

Gemäß einer bevorzugten Weiterbildung der Windenergieanlage ist außerdem vorgesehen, dass die Signalvorrichtung derart ausgebildet ist, dass die Signalvorrichtung als Warnmitteilung eine akustische Sprachmitteilung empfängt und meldet.

Eine weitere Lösung der Aufgabe besteht darin, dass eine Windenergieanlage vor oder während der Durchführung von Wartungsarbeiten an der Windenergieanlage mit folgenden Einrichtungen ausgestattet ist: ein Sensor, mittels dessen wenigstens ein durch Windbewegung außerhalb der Windenergieanlage induzierter physikalischer Zustand der Umgebung außerhalb der Windenergieanlage als äußerer physikalischer Zustand erfasst wird, und/oder ein Sensor, mittels dessen wenigstens ein physikalischer Zustand eines Bauteils der Windenergieanlage, der durch die Windbewegung außerhalb der Windenergieanlage beeinflusst wird, als innerer physikalischer Zustand erfasst wird, eine Auswerteeinrichtung, mittels der der wenigstens eine äußere physikalische Zustand und/oder der wenigstens eine innere physikalische Zustand ausgewertet werden und mittels der der wenigstens eine äußere physikalische Zustand mit einem vorbestimmten Referenzwert für den äußeren physikalischen Zustand verglichen wird und/oder der wenigstens eine innere physikalische Zustand mit einem vorbestimmten Referenzwert für den inneren physikalischen Zustand verglichen wird und in Abhängigkeit des Vergleichs und bei Überschreitung eines vorbestimmten Grenzwertes für den wenigstens einen äußeren physikalischen Zustand und/oder bei Überschreitung eines vorbestimmten Grenzwertes für den wenigstens einen inneren physikalischen Zustand wenigstens eine Wartungswarnmitteilung erzeugt wird, und eine Signalvorrichtung, die die Wartungswarnmitteilung von der Auswerteeinrichtung empfängt und meldet, wobei die Windenergieanlage gemäß einem vorstehend beschriebenen erfindungsgemäßen Verfahren betrieben wird.

Hierdurch ist es möglich, eine nachrüstbare Signaleinheit bzw. Signalvorrichtung mit einer vorzugsweise standardisierten Schnittstelle zum Anschluss an eine vorhandene Windenergieanlagensteuerung bereitzustellen. Durch die erfindungsgemäße Windenergieanlage wird mindestens ein Umgebungsparameter an der Windenergieanlage überwacht, wobei die Windenergieanlage sowohl einen Messsensor, eine Messwerterfassungs- und -auswertungseinheit sowie eine Signaleinheit, welche ein Signal abgibt, wenn der Umgebungsparameter einen vorgebbaren Grenzwert überschreitet, umfasst. Hierbei kann der Messsensor auch auf der Windenergieanlage installiert sein. Bevorzugterweise ist die Messwerterfassung und -auswertung Bestandteil einer vorhandenen Windturbinensteuerung, so dass entsprechend nur eine Signaleinheit zur Abgabe der Wartungswarnmitteilungen oder dergleichen zu ergänzen ist bzw. nachgerüstet wird.

Erfindungsgemäß wird die Windenergieanlage gemäß dem vorangehend beschriebenen Verfahren betrieben, wobei zur Vermeidung von Wiederholungen auf die obigen Ausführungen ausdrücklich verwiesen wird.

Darüber hinaus wird die Aufgabe gelöst durch eine Verwendung einer voranstehend beschriebenen Warneinrichtung zur Erzeugung einer Wartungswarnmitteilung in oder an einer Windenergieanlage bei oder während Wartungsarbeiten an einer Windenergieanlage, wie voranstehend beschrieben.

Die Erfindung wird nachstehend ohne Beschränkung des allgemeinen Erfindungsgedankens anhand eines Ausführungsbeispiels exemplarisch beschrieben, wobei bezüglich aller im Text nicht näher erläuterten erfindungsgemäßen Einzelheiten ausdrücklich auf die Zeichnung verwiesen wird. Es zeigt:

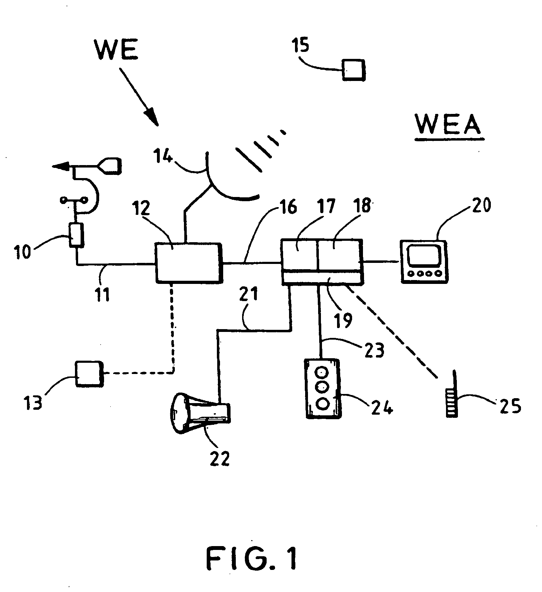

- Fig. 1: schematisch den Aufbau einer Warneinrichtung einer Windenergieanlage.

In Fig. 1 ist schematisch eine Warneinrichtung WE einer nicht weiter dargestellten Windenergieanlage WEA dargestellt. Mittels eines Sensors 10, z.B. in Form eines Windgebers, wird die Windbewegung bzw. die Windgeschwindigkeit und -richtung des Windes außerhalb der Windenergieanlage WEA als äußerer physikalischer Zustand der Umgebung erfasst und über eine Leitung 11 an eine Datenerfassungseinrichtung 12 weitergeleitet.

Die Datenerfassungseinrichtung 12 erhält in einer weiteren Ausgestaltung zusätzlich oder alternativ von einem anderen Sensor 13 ebenfalls entsprechende Messdaten, wobei mittels des Sensors 13 innere physikalische Zustände eines Bauteils der Windenergieanlage, die durch die Windbewegung außerhalb der Windenergieanlage WEA hervorgerufen werden, erfasst werden. Dies kann beispielsweise die direkte Messung der Bauteilbeanspruchung z.B. einer Arretiervorrichtung über geeignete Messmittel, z.B. Dehnungsmessstreifen, sein.

Zusätzlich oder alternativ werden an die Datenerfassungseinrichtung 12 über eine Empfangsantenne 14 Messdaten eines von der Windenergieanlage WEA räumlich getrennten Sensors 15 übermittelt. Mittels des Sensors 15 kann beispielsweise der physikalische Zustand eines Gewässers, in dem die Windenergieanlage installiert ist, erfasst werden. Hierzu zählen die Wellenbewegung, die Wellenfrequenz sowie die Wellenhöhe des Gewässers.

Überdies kann es sich in einer Ausgestaltung des Sensors 15 um einen Wettersatelliten oder ein Wetterradar oder dergleichen handeln, wodurch die äußeren physikalischen Zustände an der Windenergieanlage WEA erfasst werden.

Von der Datenerfassungseinrichtung 12 werden die Messdaten über eine Verbindungsleitung 16 an eine Auswerteeinrichtung 17 übermittelt. Die Auswerteeinheit 17 verfügt ferner über eine Eingabeeinheit 18 und eine Signaleinheit 19. Hierzu ist ferner die Eingabeeinheit 18 mit einem Bedienterminal 20 verbunden, um entsprechende Grenzwerte oder Referenzwerte der Auswerteeinheit 17 vorzugeben.

In einer weiteren vorteilhaften Ausgestaltung können die Einheiten 12, 17, 18, 19, und 20 auch in einem einzigen Modul oder in einer Baueinheit zusammengefasst sein.

In der Auswerteeinheit 17 werden die von der Datenerfassungseinheit 12 übermittelten Werte für die äußeren bzw. inneren physikalischen Zustände mit einem Referenzwert bzw. einem Grenzwert verglichen, wobei bei Überschreitung des Grenzwertes für den entsprechenden physikalischen Zustand von der Signaleinheit 19 ein Warnsignal an Wartungspersonen, die an der Windenergieanlage WEA Wartungsmaßnahmen durchführen, übermittelt wird.

Beispielsweise ist hierzu die Signaleinheit 19 über eine Leitung 21 mit einem Signalhorn 22 verbunden. Darüber hinaus ist die Signaleinheit 19 in einer Ausgestaltung über eine Leitung 23 mit einer optischen Anzeige 24 verbunden, mittels der beispielsweise Warnmitteilungen mit unterschiedlichen Warnstufen angezeigt werden können, z.B. in Form einer Ampelschaltung.

Weiterhin wird von der Signaleinheit 19 bei Überschreitung eines Grenzwertes eine Wartungswarnmitteilung an ein mobiles Endgerät 25 übertragen, das eine Wartungsperson an der Windenergieanlage WEA mit sich führt.

Im Rahmen der Erfindung ist es denkbar, dass mehrere Arten der Warnmitteilung bei gefährlichen Windgeschwindigkeiten in der Umgebung der Windenergieanlage miteinander kombiniert werden können.

Dadurch wird somit ein Warnsystem bei Wartungsarbeiten an einer Windenergieanlage bereitgestellt, wodurch die Sicherheit des Wartungspersonals signifikant erhöht wird.

Um bei bereits vorhandenen Windenergieanlagen (WEA) einen Umrüstaufwand zu vermeiden, sieht eine besonders einfache Ausgestaltungsform der Erfindung lediglich die Bereitstellung einer Signaleinrichtung an der Windenergieanlagen (WEA) vor. Diese Signaleinrichtung kann auch in Form von mobilen Endgeräten 25, die mindestens zwei Personen des Wartungspersonals ständig bei sich tragen, ausgeführt sein. Im Falle einer Sprachmitteilung kann der Lautsprecher z.B. in Form eines Kopfhörers oder eines Headsets, welches vom Personal getragen wird, ausführt sein.

In diesem Fall kann die Fernüberwachungszentrale die Messdaten der ohnehin bereits in einer Windenergieanlage vorhandenen Messsensoren, z.B. der Windgeber 10, abrufen und auswerten, und im Falle einer Grenzwertüberschreitung eine Wartungswarnmitteilung an die mobilen Endgeräte 25 des Wartungspersonals aussenden.

Alternativ kann die Auswertung der Messdaten auch in der auf Windenergieanlagen ohnehin vorhandenen Steuerungseinrichtung erfolgen, die in der Regel derart ausgebildet ist, dass im Falle von Störfällen entsprechende Störfallmitteilungen auf mobile Endgeräte gesendet werden. In diesem Fall ist zur Nachrüstung der erfindungsgemäßen Signaleinrichtung 19 auf einer vorhandenen Windenergieanlage WEA beispielsweise eine Software-Update erforderlich, bei der ein Softwaremodul aufgespielt wird, welches die Durchführung des erfindungsgemäßen Verfahrens ermöglicht.

Bevorzugt sind alle Komponenten der erfindungsgemäßen Vorrichtung nach zertifizierten Sicherheitsstandards ausgeführt, um allen Anforderungen der Arbeitssicherheit des Wartungspersonals gerecht zu werden. Dies kann z.B. die redundante Ausführung wichtiger Systemkomponenten beinhalten.

### Bezugszeichenliste

- 10: Sensor
- 11: Leitung
- 12: Datenerfassungseinrichtung
- 13: Sensor
- 14: Empfangsantenne
- 15: Sensor
- 16: Verbindungsleitung
- 17: Auswerteeinheit
- 18: Eingabeeinheit
- 19: Signaleinheit
- 20: Bedienterminal
- 21: Leitung
- 22: Signalhorn
- 23: Leitung
- 24: optische Anzeige
- 25: mobiles Endgerät
- WE: Warneinrichtung
- WEA: Windenergieanlage

## Patentansprüche

1. Verfahren zum Betreiben einer Windenergieanlage (WEA), **dadurch gekennzeichnet, dass**
- wenigstens ein durch Windbewegung außerhalb der Windenergieanlage (WEA) induzierter physikalischer Zustand der Umgebung außerhalb der Windenergieanlage (WEA) als äußerer physikalischer Zustand erfasst wird und/oder wenigstens ein physikalischer Zustand eines Bauteils der Windenergieanlage (WEA), der durch die Windbewegung außerhalb der Windenergieanlage (WEA) beeinflusst wird, als innerer physikalischer Zustand erfasst wird,
- der wenigstens eine äußere physikalische Zustand und/oder der wenigstens eine innere physikalische Zustand ausgewertet werden,
- der wenigstens eine äußere physikalische Zustand mit einem vorbestimmten Referenzwert für den äußeren physikalischen Zustand verglichen wird und/oder der wenigstens eine innere physikalische Zustand mit einem vorbestimmten Referenzwert für den inneren physikalischen Zustand verglichen wird,
- in Abhängigkeit des Vergleichs und
a.) bei Überschreitung eines vorbestimmten Grenzwertes für den wenigstens einen äußeren physikalischen Zustand und/oder
b.) bei Überschreitung eines vorbestimmten Grenzwertes für den wenigstens einen inneren physikalischen Zustand
wenigstens eine Wartungswarnmitteilung erzeugt wird, wobei das Verfahren vor oder während Wartungsarbeiten an der Windenergieanlage (WEA), vorzugsweise bei einem Stillstand oder während eines Stillstands der Windenergieanlage (WEA), ausgeführt wird, wobei anhand der Eingabe oder der Kategorie von spezifizierten Wartungsarbeiten, vorzugsweise über die Art oder die Dauer der Wartungsarbeiten, der Grenzwert für den wenigstens einen äußeren physikalischen Zustand und/oder der Grenzwert für den wenigstens einen inneren physikalischen Zustand für die Erzeugung der Wartungswarnmitteilungen mit unterschiedlichen Warnstufen variiert und/oder bestimmt wird oder werden.

2. Verfahren nach Anspruch 1, **dadurch gekennzeichnet, dass** als äußerer physikalischer Zustand die Windgeschwindigkeit und/oder die Windrichtung und/oder die Wellenbewegung eines Gewässers und/oder die Wellenfrequenz eines Gewässers und/oder die Wellenhöhe eines Gewässers erfasst werden und/oder dass als innerer physikalischer Zustand die Auslenkung des Turms der Windenergieanlage (WEA) und/oder die Auslenkung des Rotorblatts der Windenergieanlage (WEA) und/oder die Vibration und/oder, insbesondere mechanische, Beanspruchung eines Bauteils der Windenergieanlage (WEA) erfasst werden.

3. Verfahren nach Anspruch 1 oder 2, **dadurch gekennzeichnet, dass** der äußere physikalische Zustand für eine vorbestimmte Zeitdauer und/oder der innere physikalische Zustand für eine vorbestimmte Zeitdauer erfasst und/oder aufgezeichnet werden und/oder dass die erfassten äußeren physikalischen Zustände zu einem äußeren Zustandsmittelwert gemittelt werden und/oder die erfassten inneren physikalischen Zustände zu einem inneren Zustandsmittelwert gemittelt werden.

4. Verfahren nach einem der Ansprüche 1 bis 3, **dadurch gekennzeichnet, dass** als Wartungswarnmitteilung ein akustisches und/oder optisches und/oder mechanisches Wartungswarnsignal erzeugt werden, wobei insbesondere das Wartungswarnsignal einer Wartungsperson übermittelt wird.

5. Verfahren nach einem der Ansprüche 1 bis 4, **dadurch gekennzeichnet, dass** Wartungswarnmitteilungen mit unterschiedlichen Warnstufen in Abhängigkeit von der vorbestimmten Größe der Abweichungen vom vorbestimmten Grenzwert erzeugt werden.

6. Verfahren nach einem der Ansprüche 1 bis 5, **dadurch gekennzeichnet, dass** die Wartungswarnmitteilung oder Wartungswarnmitteilungen an ein mobiles, insbesondere tragbares, Warngerät übertragen werden.

7. Verfahren nach einem der Ansprüche 1 bis 6, **dadurch gekennzeichnet, dass** der äußere physikalische Zustand mittels eines Sensors an der Windenergieanlage (WEA) und/oder mittels eines räumlich von der Windenergieanlage (WEA) getrennten Sensors erfasst wird.

8. Verfahren nach einem der Ansprüche 1 bis 7, **dadurch gekennzeichnet, dass** bei der Auswertung des wenigstens einen äußeren physikalischen Zustands und/oder des wenigstens einen inneren physikalischen Zustands die Zeitdauer für eine durchzuführende Wartungsmaßnahme an der Windenergieanlage (WEA) berücksichtigt wird und/oder dass bei der Auswertung meteorologische Daten über die Umgebung der Windenergieanlage (WEA) berücksichtigt werden.

9. Verfahren nach einem der Ansprüche 1 bis 8, **dadurch gekennzeichnet, dass** gleichzeitig für den äußeren physikalischen Zustand jeweils die Abweichung eines ersten Mittelwerts des Zustands für eine erste vorbestimmte Zeitdauer von einem ersten vorbestimmten Referenzwert und die Abweichung eines zweiten Mittelwerts des Zustands für eine zweite vorbestimmte Zeitdauer von einem zweiten vorbestimmten Referenzwert überwacht werden und/oder dass gleichzeitig für den inneren physikalischen Zustand jeweils die Abweichung eines ersten Mittelwerts des Zustands für eine erste vorbestimmte Zeitdauer von einem ersten vorbestimmten Referenzwert und die Abweichung eines zweiten Mittelwerts des Zustands für eine zweite vorbestimmte Zeitdauer von einem zweiten vorbestimmten Referenzwert überwacht werden
und/oder dass bei Überschreitung eines Grenzwerts eines Mittelwerts des äußeren physikalischen Zustandes eine erste Wartungswarnmitteilung und bei Überschreitung beider Grenzwerte des äußeren physikalischen Zustands eine zweite Wartungswarnmitteilung erzeugt werden
und/oder dass bei Überschreitung eines Grenzwerts eines Mittelwerts des inneren physikalischen Zustandes eine erste Wartungswarnmitteilung und bei Überschreitung beider Grenzwerte des inneren physikalischen Zustands eine zweite Wartungswarnmitteilung erzeugt werden.

10. Verfahren nach einem der Ansprüche 4 bis 9, **dadurch gekennzeichnet, dass** als Wartungswarnmitteilung eine akustische Sprachmitteilung von einer Warneinrichtung erzeugt wird, die über einen Lautsprecher an oder in der Windenergieanlage (WEA) übertragen wird
und/oder dass die Warneinrichtung durch eine Betätigungsaktion oder durch Eingabe von durchzuführenden, vorzugsweise spezifizierten Wartungsarbeiten, vorzugsweise bei oder während oder vor Durchführung an der Windenergieanlage (WEA) aktiviert wird oder ist
und/oder dass die Lautstärke des oder der Lautsprecher der Windenergieanlagen (WEA) an die Lautstärke der Umgebung des Lautsprechers angepasst wird.

11. Windenergieanlage (WEA), **dadurch gekennzeichnet, dass** die Windenergieanlage (WEA) vor oder während der Durchführung von Wartungsarbeiten an der Windenergieanlage (WEA) die folgenden Einrichtungen aufweist: ein Sensor, mittels dessen wenigstens ein durch Windbewegung außerhalb der Windenergieanlage (WEA) induzierter physikalischer Zustand der Umgebung außerhalb der Windenergieanlage (WEA) als äußerer physikalischer Zustand erfasst wird, und/oder ein Sensor, mittels dessen wenigstens ein physikalischer Zustand eines Bauteils der Windenergieanlage (WEA), der durch die Windbewegung außerhalb der Windenergieanlage (WEA) beeinflusst wird, als innerer physikalischer Zustand erfasst wird, eine Auswerteeinrichtung, mittels der der wenigstens eine äußere physikalische Zustand und/oder der wenigstens eine innere physikalische Zustand ausgewertet werden und mittels der der wenigstens eine äußere physikalische Zustand mit einem vorbestimmten Referenzwert für den äußeren physikalischen Zustand verglichen wird und/oder der wenigstens eine innere physikalische Zustand mit einem vorbestimmten Referenzwert für den inneren physikalischen Zustand verglichen wird und in Abhängigkeit des Vergleichs und bei Überschreitung eines vorbestimmten Grenzwertes für den wenigstens einen äußeren physikalischen Zustand und/oder bei Überschreitung eines vorbestimmten Grenzwertes für den wenigstens einen inneren physikalischen Zustand wenigstens eine Wartungswarnmitteilung erzeugt wird, und eine Signalvorrichtung, die die Wartungswarnmitteilung von der Auswerteeinrichtung empfängt und meldet, wobei die Windenergieanlage (WEA) gemäß dem Verfahren nach einem der Ansprüche 1 bis 10 betrieben wird.

12. Verwendung eines Warnsystems in oder an einer Windenergieanlage (WEA) nach Anspruch 11 bei oder während Wartungsarbeiten an der Windenenergieanlage (WEA).

## Claims

1. A method for operating a wind power plant (WEA), **characterized in that**
- at least one physical condition of the surroundings outside the wind power plant (WEA) induced by wind movement outside the wind power plant (WEA) is captured as an external physical condition and/or at least one physical condition of a component of the wind power plant (WEA) influenced by wind movement outside the wind power plant (WEA) is captured as an internal physical condition,
- the at least one external physical condition and/or at least one internal physical condition are evaluated,
- the at least one external physical condition is compared with a predetermined reference value for the external physical condition and/or the at least one internal physical condition is compared with a predetermined reference value for the internal physical condition,
- depending on the comparison and
a) upon exceeding a predetermined limit value for the at least one external physical condition and/or
b) upon exceeding a predetermined limit value for the at least one internal physical condition at least one maintenance warning message is generated,
wherein the method is performed before or during maintenance work on the wind power plant (WEA), preferably at a standstill or during a standstill of the wind power plant (WEA),
wherein based on the entry or the category and/or depending on specified maintenance tasks, preferably via the type or duration of the maintenance work, the limit value for the at least one external physical condition and/or the limit value for the at least one internal physical condition is or are varied and/or determined for the generation of the warning message with various warning stages.

2. The method according to claim 1, **characterized in that** the wind velocity and/or the wind direction and/or the wave motion of a body of water and/or the wave frequency of a body of water and/or the wave height of a body of water are captured as external physical condition and/or that the deflection of the tower of the wind power plant (WEA) and/or the deflection of the rotor blade of the wind power plant (WEA) and/or the vibration and/or the, in particular mechanical, load of a component of the wind power plant (WEA) are captured as internal physical condition.

3. The method according to claim 1 or 2, **characterized in that** for a predetermined period the external physical condition and/or for a predetermined period the internal physical condition are captured and/or recorded and/or that the captured external physical conditions are averaged to an external average condition value and/or the captured internal physical conditions are averaged to an internal average condition value.

4. The method according to one of claims 1 to 3, **characterized in that** an acoustic and/or visual and/or mechanical maintenance warning signal is generated as a maintenance warning message, wherein in particular the maintenance warning signal is transmitted to a maintenance person.

5. The method according to one of claims 1 to 4, **characterized in that** maintenance warning messages are generated with various warning stages dependent on the predetermined magnitude of the deviations from the predetermined limit value.

6. The method according to one of claims 1 to 5, **characterized in that** the maintenance warning message or maintenance warning messages are transmitted to a mobile, in particular portable, warning unit.

7. The method according to one of claims 1 to 6, **characterized in that** the external physical condition is captured by means of a sensor on the wind power plant (WEA) and/or by means of a sensor separated spatially from the wind power plant (WEA).

8. The method according to one of claims 1 to 7, **characterized in** during the evaluation of the at least one external physical condition and/or of the at least one internal physical condition the length of time for a maintenance task to be performed on the wind power plant (WEA) is taken into account and/or that during the evaluation meteorological data on the environment of the wind power plant (WEA) will be taken into account.

9. The method according to one of claims 1 to 8, **characterized in that** simultaneously for the external physical condition the deviation of a first average value of the condition for a first predetermined period from a first predetermined reference value and the deviation of a second average value of the condition for a second predetermined period from a second predetermined reference value are each monitored and/or that simultaneously for the internal physical condition the deviation of a first average value of the condition for a first predetermined period from a first predetermined reference value and the deviation of a second average value of the condition for a second predetermined period from a second predetermined reference value are each monitored
and/or that upon exceeding a limit value of an average value of the external physical condition a first maintenance warning message is generated and upon exceeding both limit values of the external physical condition a second maintenance warning message is generated
and/or that upon exceeding a limit value of an average value of the internal physical condition a first maintenance warning message is generated and upon exceeding both limit values of the internal physical condition a second maintenance warning message is generated.

10. The method according to one of claims 4 to 9, **characterized in that** an acoustic voice message is generated as a maintenance warning message by a warning device, which is transmitted over a loudspeaker on or in the wind power plant (WEA)
and/or that the warning device will be or is activated by an actuating action or by entry of maintenance work to be performed, preferably specified maintenance work, preferably upon or during or before performing maintenance work on the wind power plant (WEA)
and/or that the volume of the loudspeaker or the loudspeakers of the wind power plant (WEA) is adapted to the volume of the environment of the loudspeaker.

11. A wind power plant (WEA), **characterized in that** the wind power plant (WEA) before or during the performance of maintenance work on the wind power plant has the following devices:
a sensor, by means of which at least one physical condition of the environment outside of the wind power plant (WEA) induced by wind movement outside of the wind power plant (WEA) is captured as an external physical condition, and/or a sensor, by means of which at least one physical condition of a component of the wind power plant (WEA) which is influenced by the wind movement outside of the wind power plant (WEA) is captured as an internal physical condition, an evaluation unit, by means of which the at least one external physical condition and/or at least one internal physical condition are evaluated and by means of which the at least one external physical condition is compared with a predetermined reference value for the external physical condition and/or the at least one internal physical condition is compared with a predetermined reference value for the internal physical condition and, depending on the comparison and upon exceeding a predetermined limit value for the at least one external physical condition and/or upon exceeding a predetermined limit value for the at least one internal physical condition at least one maintenance warning message is generated, and a signaling device, by means of which the maintenance warning message from the evaluation unit is received and announced, wherein the wind power plant (WEA) is operated according to a method according to one of claims 1 to 10.

12. Use of a warning in or on a wind power plant (WEA) according to claim 11 upon or during maintenance work on the wind power plant (WEA).

## Revendications

1. Procédé destiné à faire fonctionner une installation éolienne (WEA), **caractérisé en ce que**
- au moins un état physique, induit par le déplacement du vent en dehors de l'installation éolienne (WEA), de l'environnement à l'extérieur et/ou au moins un état physique d'un composant de l'installation éolienne (WEA), qui est influencé par le mouvement du vent à l'extérieur de l'installation éolienne (WEA), est détecté comme état physique intérieur,
- ledit au moins un état physique extérieur et/ou ledit au moins un état physique sont analysés,
- ledit au moins un état physique extérieur est comparé avec une valeur de référence prédéfinie pour l'état physique extérieur et/ou ledit au moins un état physique intérieur est comparé avec une valeur de réference prédéfinie pour l'état physique intérieur,
- en fonction de la comparaison et
a) en cas de dépassement d'une valeur limite prédéfinie pour ledit au moins un état physique extérieur et/ou
b) en cas de dépassement d'une valeur limite prédéfinie pour ledit au moins un état physique intérieur
au moins un message d'avertissement de maintenance est géneré, le procédé étant mis en œuvre avant ou pendant des travaux de maintenance sur l'installation éolienne (WEA), de préférence lors d'un arrêt de l'installation éolienne (WEA), dans lequel à l'aide de l'entrée ou de la catégorie de travaux de maintenance spécifiés, de préférence concernant la nature ou la durée des travaux de maintenance, la valeur limite pour ledit au moins un état physique extérieur et/ou la valeur limite pour ledit au moins un état physique extérieur et/ou la valeur limite pour ledit au moins un état physique intérieur pour la génération des messages d'avertissement de maintenance sont modifiées et/ou déterminées avec différents niveaux d'avertissement

2. Procédé selon la revendication 1, **caractérisé en ce que** la vitesse du vent et/ou la direction du vent et/ou le mouvement d'onde d'un cours d'eau et/ou la fréquence d'onde d'un cours d'eau et/ou la hauteur d'onde d'un cours d'eau sont détectés comme état physique extérieur et/ou **en ce que** la déviation de la tour de l'installation éolienne (WEA) et/ou la déviation de la pale de rotor de l'installation éolienne (WEA) et/ou la vibration et/ou a sollicitation, en particulier mécanique, d'un composant de l'installation éolienne (WEA) sont détectées comme état physique intérieur.

3. Procédé selon la revendication 1 ou 2, **caractérisé en ce que** l'état physique extérieur et/ou l'état physique intérieur sont détectées et/ou enregistrés chacun pour une durée prédéfinie et/ou **en ce que** les états physiques extérieurs détectés font l'objet d'un calcul de moyenne pour former une valeur moyenne d'état extérieur et/ou les états physiques intérieurs détectés font l'objet d'un calcul de valeur moyenne pour former une valeur moyenne d'état intérieur.

4. Procédé selon l'une des revendications 1 à 3, **caractérisé en ce qu'**un signal d'avertissement de maintenance acoustique et/ou un signal d'avertissement de maintenance optique et/ou un signal d'avertissement de maintenance mécanique sont générés comme message d'avertissement de maintenance, en particulier le signal d'avertissement de maintenance étant transmis à une personne chargée de la maintenance.

5. Procédé selon l'une des revendications 1 à 4, **caractérisé en ce que** les messages d'avertissement de maintenance avec différent niveaux d'avertissement sont générés en fonction de la grandeur prédéfinie des écarts par rapport à la valeur limite prédéfinie.

6. Procédé selon l'une des revendications 1 à 5, **caractérisé en ce que** le message d'avertissement de maintenance ou les messages d'avertissement de maintenance sont transmis à un appareil d'avertissement mobile, en particulier portable.

7. Procédé selon l'une des revendications 1 à 6, **caractérisé en ce que** l'état physique extérieur est détecté au moyen d'un capteur placé sur l'installation éolienne (WEA) et/ou au moyen d'un capteur séparé dans l'espace de l'installation éolienne (WEA).

8. Procédé selon l'une des revendications 1 à 7, **caractérisé en ce que**, lors de l'analyse du au moins un état physique extérieur et/ou du moins un état physique intérieur, da durée pour une mesure de maintenance à mettre en œuvre sur l'installation éolienne (WEA) est prise en compte et/ou **en ce que**, lors de l'analyse, des données météorologiques concernant l'environnement de l'installation éolienne (WEA) sont prises en compte.

9. Procédé selon l'une des revendications 1 à 8, **caractérisé en ce que**, de façon simultanée pour l'état physique extérieur, à chaque fois l'écart entre une première valeur moyenne de l'état pour une première durée prédéfinie et une première valeur de référence prédéfinie et l'écart entre une seconde valeur moyenne de l'état pour une seconde durée prédéfinie et une seconde valeur de référence prédéfinie sont contrôlés et/ou **en ce que**, de façon simultanée pour l'état physique intérieur, à chaque fois l'écart entre une première valeur moyenne de l'état pour une première durée prédéfinie et une première valeur de référence prédéfinie et l'écart entre une seconde valeur moyenne de l'état pour une seconde durée prédéfinie et une seconde valeur de référence prédéfinie sont contrôles
et/ou **en ce qu'**un premier message d'avertissement de maintenance est généré en cas de dépassement d'une valeur limite d'une valeur moyenne de l'état physique extérieur et un second message d'avertissement de maintenance est généré en cas de dépassement des deux valeurs limites de l'état physique extérieur
et/ou **en ce qu'**un premier message d'avertissement de maintenance est généré en cas de dépassement d'une valeur limite d'une valeur moyenne de l'état physique intérieur et un second message d'avertissement de maintenance est généré en cas de dépassement des deux valeurs limites de l'état physique intérieur.

10. Procédé selon l'une des revendications 4 à 9, **caractérisé en ce que**, comme message d'avertissement de maintenance, un dispositif d'avertissement génère un message vocal sonore qui est transmis par un haut-parleur à ou dans l'installation éolienne (WEA)
et/ou **en ce que** le dispositif d'avertissement est activé par une action de commande ou par l'entrée de travaux de maintenance à effectuer, de préférence spécifiés, de préférence lors de l'exécution ou pendant ou avant l'exécution sur l'installation éolienne (WEA)
et/ou **en ce que** l'intensité sonore du ou des haut-parleurs des installations éoliennes (WEA) est adaptée à l'intensité sonore de l'environnement du haut-parleur.

11. Installation éolienne (WEA), **caractérisée en ce que** l'installation éolienne (WEA) présente les dispositifs suivants avant ou pendant l'exécution de travaux de maintenance sur l'installation éolienne (WEA) :
un capteur, au moyen duquel au moins un état physique, induit par le mouvement du vent en dehors de l'installation éolienne (WEA), de l'environnement en dehors de l'installation éolienne (WEA) est détecté comme état physique extérieur, et/ou un capteur, au moyen duquel au moins un état physique d'un composant de l'installation éolienne (WEA), qui est influencé par le mouvement du vent à l'extérieur de l'installation éolienne (WEA), est détecté comme état physique intérieur, un dispositif d'analyse, au moyen duquel ledit au moins un état physique extérieur et/ou ledit au moins un état physique intérieur sont analysés et au moyen duquel ledit au moins un état physique extérieur est comparé avec une valeur de référence prédéfinie pour l'état physique extérieur et/ou ledit au moins un état physique intérieur est comparé avec une valeur de référence prédéfinie pour l'état physique intérieur et au moins un message d'avertissement de maintenance est généré en fonction de la comparaison et en cas de dépassement d'une valeur limite prédéfinie pour ledit au moins un état physique extérieur et/ou en cas de dépassement d'une valeur limite prédéfinie pour ledit au moins un état physique intérieur, et un dispositif de signalisation, qui reçoit le message d'avertissement de maintenance du dispositif d'analyse et le transmet, l'installation éolienne (WEA) étant exploitée selon le procédé selon l'une des revendications 1 à 10.

12. Utilisation d'un dispositif d'avertissement dans ou sur une installation éolienne (WEA) selon revendication 11 lors ou au cours de travaux de maintenance sur l'installation éolienne (WEA).
